# FASCICULE DE BREVET EUROPEEN

(11) **EP 1 236 852 B1**
(45) Date de publication et mention de la délivrance du brevet: **02.11.2005**
(21) Numéro de dépôt: 02290359.5
(22) Date de dépôt: 14.02.2002
(51) Int. Cl.: E05D 5/06

(54) **Plaquette de fixation**
Befestigungsplatte
Fastening plate

(30) Priorité: 02.03.2001 FR 0102856
(43) Date de publication de la demande: 04.09.2002
(73) Titulaire: Renault s.a.s., 92100 Boulogne Billancourt (FR)
(72) Inventeur: Bezeault, Loic, 78390 Bois d'Arcy (FR); Pancrace, Pascal, 92000 Nanterre (FR)

(56) Documents cités:
- FR-A- 2 754 008
- FR-A- 2 784 135

## Description

L'invention concerne une plaquette de fixation destinée à venir sur la face d'un support telle qu'une plaque ou un panneau et coopérer avec des dispositifs de fixation traversants tels que des vis, des tiges filetées, etc. pour serrer ledit support et participer à la fixation d'une pièce sur l'autre face du support.

Par exemple, le support en question peut être l'ouvrant latéral d'une porte et la pièce à fixer une charnière, telle que la charnière décrite dans le document FR 2 784 135. L'ouvrant est pris en sandwich entre charnière et la face de la plaquette opposée aux têtes de vis. Un écrou vient maintenir l'ensemble. Un autre exemple de platine de fixation est décrite dans le document FR 2754008.

Une telle plaquette plane améliore la tenue de l'ensemble lors d'un essai normalisé appelé "affaissement" pendant lequel on exerce une charge de valeur définie (80 kg) au niveau de la serrurerie de l'ouvrant, et on mesure les déformations au niveau de la liaison porte-charnière.

Le but de l'invention est de modifier les plaquettes connues de manière à pouvoir améliorer la résistance de la liaison, voire la moduler selon certaines directions.

L'invention atteint son but grâce à une plaquette comportant une face généralement plane susceptible de s'appuyer sur le support, et au moins un passage pour un élément de fixation traversant dont une partie est retenue en appui sur une zone de la plaquette entourant le passage, caractérisée en ce que ladite zone est formée dans un bossage de la plaquette, de manière à déporter les forces d'appui de l'élément de fixation sur une région plus importante du support. En effet, les forces d'appui sont transmises par le fond et le périmètre du bossage (non en contact avec le support) vers la zone d'appui de la plaquette à la périphérie du bossage, face d'appui qui est en contact avec le support. Cette zone d'appui de la plaquette est de surface au moins égale et de préférence supérieure à la zone d'appui direct des éléments de fixation, de manière à répartir et diminuer les contraintes de pression sur le support.

Le principe même de l'invention est de déporter la zone d'appui de la tête de vis (ou analogue) sur la paroi du support (par exemple l'ouvrant), la condition essentielle étant que la zone déportée soit de surface au moins aussi importante de la zone d'appui de la tête de vis sur la partie emboutie de la plaquette. Le bossage est à fond plat et est défini par un périmètre conique, de préférence incliné à 45°. De préférence, la plaquette comporte des éléments de rigidification, notamment des bords recourbés.

La forme de la plaquette peut être très variée et inclure une ou plusieurs parties embouties, chaque partie emboutie pouvant servir d'appui à une ou plusieurs têtes de vis ou écrous. Un avantage est de pouvoir solidariser (par exemple souder ou sertir) les éléments de fixation (vis ou écrous) sur la plaquette assurant ainsi une meilleure qualité de fixation. Il est toutefois possible de réaliser un trou taraudé dans la plaquette.

La forme de l'embouti peut être très variée : polygonale, notamment rectangulaire, elliptique, etc. L'un des critères pour son choix est la facilité de réalisation de l'outil destiné à emboutir la plaquette. Un autre critère est l'encombrement de la plaquette montée sur l'ouvrant par rapport à son voisinage (pièces mécaniques, câbles, etc.). Finalement, un autre critère est la forme du cône de compression de la vis que l'on souhaite obtenir et qui vient prolonger la partie conique de la zone emboutie. Typiquement, si la zone emboutie est rectangulaire ou elliptique, c'est-à-dire présente un "grand axe" et un "petit axe", et comporte une vis en son centre, le cône de compression est beaucoup plus important sur le côté large que sur le côté étroit de la zone embouti. Autrement dit, l'ensemble formé par l'ouvrant et la charnière ainsi fixés peut supporter des moments plus élevés autour du grand axe de la zone emboutie et des moments plus faibles autour du petit axe de la zone emboutie.

On peut donc réaliser de façon très simple un ensemble de pièces fixées entre elles qui présentent des caractéristiques de résistance au moment modulées, c'est-à-dire différentes suivant la direction selon laquelle le moment est appliqué. Ceci présente un intérêt lorsqu'on veut justement avoir un ensemble fixé qui cède lorsqu'un moment suffisamment important est appliqué dans une direction privilégiée (on obtient ainsi une sorte de "fusible" pour moments).

La plaquette est réalisée dans un matériau se travaillant facilement par emboutissage et résistant à des contraintes relativement élevées, par exemple une tôle métallique, notamment d'acier.

D'autres caractéristiques et avantages de l'invention ressortiront à la lecture de la description qui va suivre, en référence aux dessins annexés sur lesquels :
- la figure 1 est une vue de face d'un premier mode de réalisation de plaquette conforme à l'invention ;
- les figures 2, 3, 4, et 5 sont des coupes selon les lignes respectives II-II, III-III, IV-IV et V-V de la plaquette de la figure 1,
- la figure 6 est une vue de face d'un second mode de réalisation de plaquette conforme à l'invention ;
- les figures 7 et 8 sont des coupes selon les lignes respectives VII-VII et VIII-VIII de la plaquette de la figure 6.

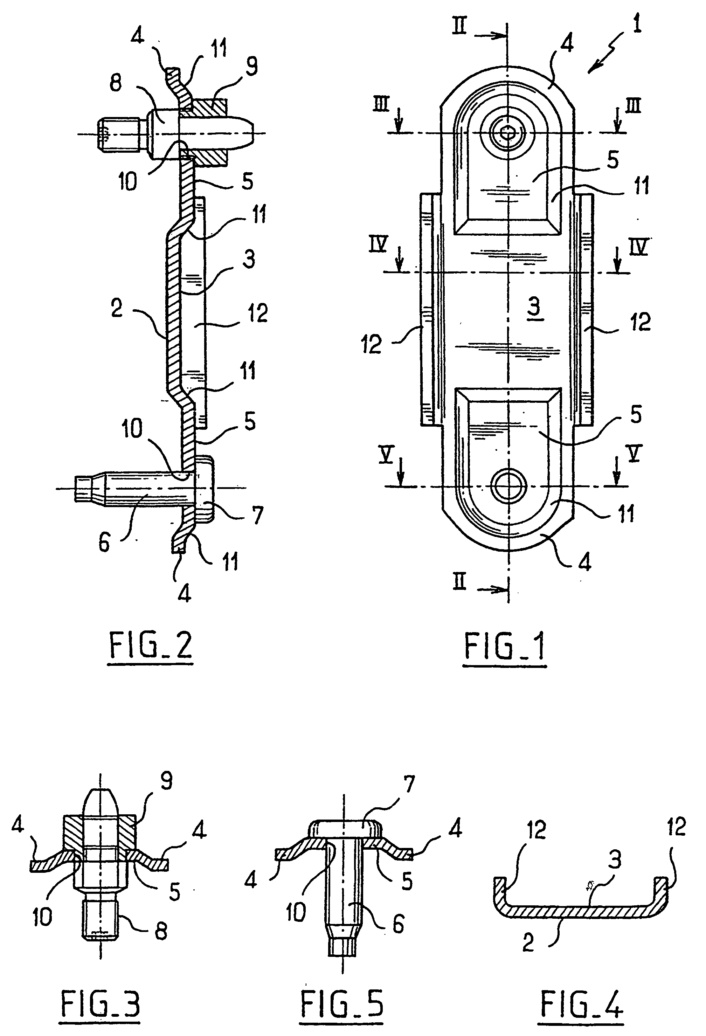

La plaquette sensiblement rectangulaire 1 des figures 1 à 5 comporte une face sensiblement plane 2 en son milieu 3 et sur une région périphérique 4 longeant les bossages 5 et susceptible de venir s'appuyer sur un support non représenté tel qu'un ouvrant de véhicule.

Les deux bossages symétriques 5 sont formés par emboutissage aux deux extrémités de la plaquette 1, et éloignent ainsi la zone d'appui des éléments de fixation, constitués par exemple d'une part par une vis 6 à tête 7 et d'autre part par une vis 8 à écrou 9. La tête 7 et l'écrou 9 s'appuient sur les bords d'ouvertures de passage 10 prévues dans les bossages 5. Avantageusement, la tête 7 et l'écrou 9 sont soudés ou sertis à la plaquette 1. Les bossages 5 ont un fond plat bordé par un raccordement conique 11 (par exemple à 45°) épousant la forme du bossage, ici en rectangle dont petit côté est arrondi en plein cintre. Des bords relevés 12 viennent rigidifier la plaquette 1, ici autour de son milieu 3. La surface des zones planes d'appui de la plaquette sur le support (surface de la région périphérique 4 et surface 2) est égale ou supérieure à la surface d'appui de la tête 7 et de l'écrou 9 sur les bossages 5 de la plaquette.

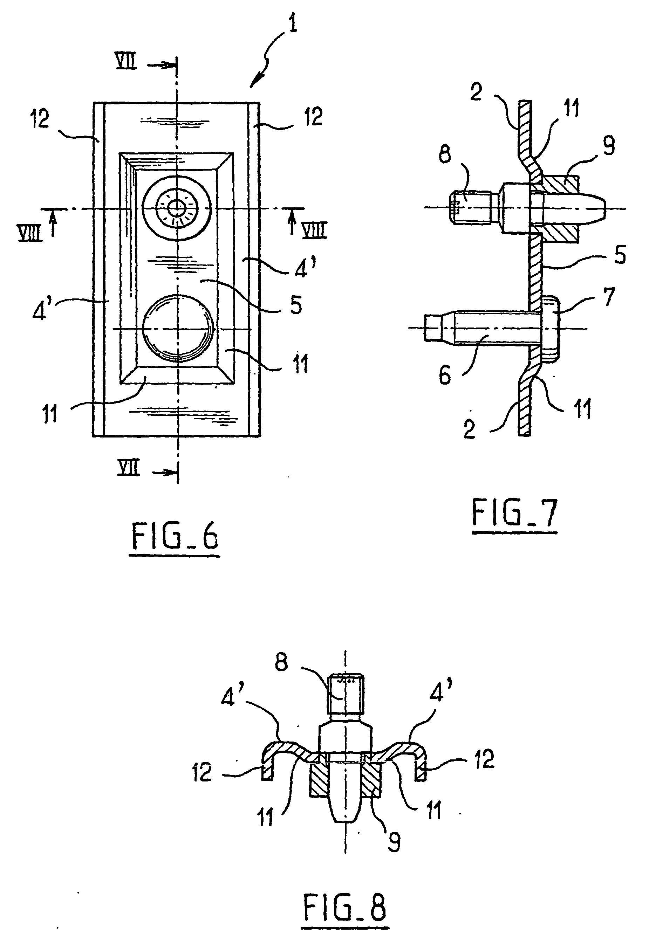

Le mode de réalisation des figures 6 à 8 diffère du premier en ce que la plaquette 1 est purement rectangulaire, et encadré par deux bords relevés longitudinaux 12 s'étendant sur toute sa longueur. Un seul bossage 5 est formé sur la plaquette 1 sur lequel s'appuient les deux éléments de fixation constitués par une vis 6 à tête 7 et une vis 8 à écrou 9. Le bossage est ici de forme rectangulaire et comporte sur son périmètre des parois inclinées à 45°. La surface plane 2 d'appui de la plaquette sur son support comprend notamment les parties 4' séparant le bossage 5 des bords pliés 12.

## Revendications

1. Plaquette (1) comportant une face généralement plane (2) susceptible de s'appuyer sur un support, et au moins un passage (10) pour un élément de fixation traversant (6, 7 ; 8, 9) dont une partie (7 ; 9)est retenue en appui sur une zone de la plaquette entourant le passage (10), **caractérisée en ce que** ladite zone est formée dans un bossage (5) de la plaquette (1), de manière à déporter les forces d'appui de l'élément de fixation sur une région plus importante du support.

2. Plaquette selon la revendication 1, **caractérisée en ce que** le bossage (5) est formé par emboutissage.

3. Plaquette selon l'une quelconque des revendications 1 ou 2, **caractérisée en ce que** le bossage (5) a un fond plat entouré par un périmètre conique (11).

4. Plaquette selon l'une quelconque des revendications 1 à 3, **caractérisée en ce que** le périmètre conique (11) est incliné à environ 45°.

5. Plaquette selon l'une quelconque des revendications 1 à 4, **caractérisée en ce que** le bossage (5) présente un grand axe et un petit axe.

6. Plaquette selon l'une quelconque des revendications 1 à 5, **caractérisée en ce que** la plaquette comporte des bords relevés (12).

7. Plaquette selon l'une quelconque des revendications 1 à 6, **caractérisée en ce que** la partie d'appui (7 ; 9) de l'élément de fixation traversant (6, 7 ; 8, 9) est solidarisée à la plaquette (1).

## Patentansprüche

1. Platte (1), aufweisend eine im Allgemeinen ebene Fläche (2), die fähig ist, sich an einem Träger anzulegen, und mindestens einen Durchgang (10) für ein durchgehendes Befestigungselement (6, 7; 8, 9), von dem ein Teil (7; 9) in Anlage an einem Bereich der Platte gehalten wird, welcher den Durchgang (10) umgibt, **dadurch gekennzeichnet, dass** der Bereich in einem Vorsprung (5) der Platte (1) in einer Weise gebildet ist, um die Anlagekräfte des Befestigungselements auf einen größeren Bereich des Trägers zu verlagern.

2. Platte nach Anspruch 1, **dadurch gekennzeichnet, dass** der Vorsprung (5) durch Tiefziehen gebildet ist.

3. Platte nach irgendeinem der Ansprüche 1 oder 2, **dadurch gekennzeichnet, dass** der Vorsprung (5) einen ebenen Boden aufweist, der von einem konischen Umfang (11) umgeben ist.

4. Platte nach irgendeinem der Ansprüche 1 bis 3, **dadurch gekennzeichnet, dass** der konische Umfang (11) um in etwa 45° geneigt ist.

5. Platte nach irgendeinem der Ansprüche 1 bis 4, **dadurch gekennzeichnet, dass** der Vorsprung (5) eine große Achse und eine kleine Achse aufweist.

6. Platte nach irgendeinem der Ansprüche 1 bis 5, **dadurch gekennzeichnet, dass** die Platte aufgerichtete Ränder (12) aufweist.

7. Platte nach irgendeinem der Ansprüche 1 bis 6, **dadurch gekennzeichnet, dass** der Anlageteil (7; 9) des durchgehenden Befestigungselements (6, 7; 8, 9) fest mit der Platte (1) verbunden ist.

## Claims

1. A plate (1) comprising a generally plane surface (2) adapted to bear on a support, and at least one passage (10) for a through fastening member (6, 7; 8,9) a part of which (7; 9) is held against a zone of the plate surrounding the passage (10), **characterised in that** this zone is formed in a boss (5) of the plate (1), so as to deflect the bearing forces of the fastening member onto a larger area of the support.

2. A plate as claimed in claim 1, **characterised in that** the boss (5) is formed by drawing.

3. A plate as claimed in any one of claims 1 or 2, **characterised in that** the boss (5) has a flat base surrounded by a conical perimeter (11).

4. A plate as claimed in any one of claims 1 to 3, **characterised in that** the conical perimeter (11) inclined at approximately 45°.

5. A plate as claimed in any one of claims 1 to 4, **characterised in that** the boss (5) has a large axis and a small axis.

6. A plate as claimed in any one of claims 1 to 5, **characterised in that** the plate comprises raised edges (12).

7. A plate as claimed in any one of claims 1 to 6, **characterised in that** the bearing portion (7; 9) of the through fastening member (6, 7; 8, 9) is made rigid with the plate (1).
